Europäisches Patentamt

European Patent Office

Office européen des brevets

(19)

(11) Veröffentlichungsnummer: **0 101 001**
**B1**

(12) EUROPÄISCHE PATENTSCHRIFT

(45) Veröffentlichungstag der Patentschrift :
23.12.87

(51) Int. Cl.⁴ : **C 01 B 25/08**, A 01 N 59/26

(21) Anmeldenummer : **83107624.5**

(22) Anmeldetag : **02.08.83**

(54) Verhinderung der Selbstzündung hydrolisierbarer Metallphosphide.

(30) Priorität : **05.08.82 ZA 825652**

(43) Veröffentlichungstag der Anmeldung :
**22.02.84 Patentblatt 84/08**

(45) Bekanntmachung des Hinweises auf die Patenterteilung : **23.12.87 Patentblatt 87/52**

(84) Benannte Vertragsstaaten :
**BE CH DE FR GB LI NL**

(56) Entgegenhaltungen :
**DE-B- 1 143 053**
**FR-A- 2 400 842**
**GB-A- 2 065 476**
**Die Akte enthält technische Angaben, die nach dem Eingang der Anmeldung eingereicht wurden und die nicht in dieser Patentschrift enthalten sind.**

(73) Patentinhaber : **DR. WERNER FREYBERG. CHEMISCHE FABRIK, DELITIA NACHF.**
**Bergstrasse**
**D-6941 Laudenbach (DE)**

(72) Erfinder : **Friemel, Wolfgang, Dr.**
**Giessenerstrasse**
**D-6148 Heppenheim (DE)**

(74) Vertreter : **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8**
**D-8000 München 40 (DE)**

## Beschreibung

Die vorliegende Erfindung betrifft die Verhinderung der Selbstzündung hydrolisierbarer Metallphosphide, nämlich ein Verfahren zur Erhöhung der Sicherheit hydrolisierbarer Metallphosphide bei der Verwendung in der Schädlingsbekämpfung, wobei die Oberfläche der Metallphosphidpartikel des Präparates mit einem hydrophobierenden Stoff imprägniert wird.

Die Erfindung bezieht sich ferner auf hydrolisierbare Metallphosphidschädlingsbekämpfungsmittel, die durch die Wirkung solcher hydrophober Stoffe gegen Selbstzündung geschützt sind.

Verfahren und Mittel dieser Art sind aus der deutschen Patentschrift 1 122 762 und den entsprechenden Auslandspatenten bekannt, worin die Verwendung fester hydrophober Stoffe wie Hartparaffinwax oder Stearin zur Imprägnierung und Beschichtung der Metallphosphidpartikel eines hydrolisierbaren Metallphosphidschädlingsbekämpfungsmittels beschrieben wird. Ferner wird diesem ein thermisch zersetzbarer Stoff einverleibt, dessen Rolle es sein soll, die Beschichtung zu sprengen, damit atmosphärische Feuchtigkeit zum Metallphosphid Zugang erhält und dadurch die hydrolytische Zersetzung des Metallphosphids und somit die Freisetzung des giftigen Phosphorwasserstoffes beschleunigt wird.

Bevorzugte thermisch zersetzbare Stoffe sind Ammoniumsalze wie Ammoniumcarbonat, oder Ammoniumkarbamat, insbesondere letzteres. Für solche zersetzbare Ammoniumsalze war es auch bekannt, dass diese die Selbstzündung des hochentzündlichen Phosphingases durch die Bildung einer Schutzgasschicht aus Ammoniak und Kohlendioxid inhibieren. Wie im Falle der vorliegenden Erfindung ist der soeben genannte Stand der Technik auf alle hydrolisierbaren Metallphosphide, die für Schädlingsbekämpfungszwecke in Frage kommen, geeignet, insbesondere Aluminiumphosphid, Magnesiumphosphid und Kalziumphosphid, vorzugsweise die beiden Erstgenannten.

Die deutsche Patentschrift 1 143 053 offenbart die Hydrophobierung von Aluminiumphosphid, Magnesiumphosphid, oder Kalziumphosphid mit wasserunlöslichen hydrophoben Metallseifen insbesondere Metallstearaten wie Zink-, Kalzium-, Magnesium- oder Aluminiumstearat.

Aus der deutschen Offenlegungsschrift DE-A-29 50 999 ist es ferner bekannt, die Selbstzündung von aluminiumphosphidhaltigen Schädlingsbekämpfungsmitteln durch die Einverleibung von Zink oder Zinkverbindungen zu inhibieren, wobei Zinkstearat, in Kombination mit einer Quelle für Ammoniak oder Ammoniumionen, als Beispiel genannt wird. Gemäss der letztgenannten Lehre ist das Vorhandensein von Zink ein zwingendes Merkmal ohne Rücksicht darauf, ob es als Zinkstearat oder andere Zinkverbindung oder selbst als metallisches Zink vorliegt. Ausserdem ist die Schutzwirkung auf Aluminiumphosphid beschränkt, während für andere Metallphosphide keine Schutzwirkung feststellbar war.

Die französische Patentanmeldung FR-A-2 400 842 beschreibt ein Schädlingsbekämpfungsmittel aus einem Alkali- und/oder Erdalkaliphosphid, das als Mittel zur Inhibierung der Selbstzündung ein oder mehrere aromatische Kohlenwasserstoffe enthält. In Beispiel 3 dieser Patentschrift ist auch die Verwendung von Ammoniumstearat (in Form eines Präparats aus 70 Teilen Magnesiumphosphid, 20 Teilen Harnstoff und 10 Teilen Ammoniumstearat) beschrieben, doch geht aus diesem Beispiel hervor, daß gleichzeitig unbedingt ein aromatischer Kohlenwasserstoff (1,2,4-Trimethylbenzol) vorhanden sein muß, wenn die Selbstzündung verhindert werden soll.

Es gibt auf diesem Fachgebiet Fälle, wo die bestehenden Methoden zum Schutz des Metallphosphids gegen Selbstzündung mit Hilfe hydrophober Stoffe mit oder ohne zersetzliche Ammoniumsalze keinen ausreichenden Schutz verliehen haben. Ohne einen solchen Schutz wären Metallphosphidmittel sehr gefährlich. Die Hydrolysereaktion, die zur gewünschten Bildung des Phosphingases führt, ist exotherm. Selbst die Reaktion mit Umgebungsluftfeuchtigkeit, insbesondere bei verhältnismässig hohen Umgebungstemperaturen, kann zur Selbstzündung des höchstentzündlichen, gebildeten Phosphorwasserstoffgases führen. Die Selbstzündung kann auch durch die lokale Anreicherung verhältnismässig hoher Phosphorwasserstoffgaskonzentrationen (wiederum je nach Umgebungstemperatur) gefördert werden. Die laut Stand der Technik angewandten Schutzmassnahmen bezwecken die Steuerung der Reaktionsgeschwindigkeit sowohl mit atmosphärischer Umgebungsfeuchtigkeit als auch bei der Reaktion im Falle einer versehentlichen Berührung mit Wasser in flüssiger Form. Letztere ergibt sich durch Berührung des Mittels mit nassen Bereichen des zu begasenden Gutes (Getreide) oder durch unbeabsichtigte Einsickerung von Regenwasser, z. B. undichte Dächer, oder durch Wasser beim Reinemachen oder andere Ursachen.

Das Problem der Selbstzündungshemmung ist besonders schwierig im Falle von Magnesiumphosphid. Magnesiumphosphid hat einige sehr wünschenswerte Eigenschaften für Schädlingsbekämpfungszwecke. Von den herkömmlich verwendeten Metallphosphiden ist es jedoch auch das reaktionsfähigste, und die obengenannten Massnahmen laut Stand der Technik haben sich im Falle von Magnesiumphosphid im allgemeinen als unzureichend für einen guten Schutz erwiesen. Aus diesem Grund gab es bisher nur ein Magnesiumphosphidmittel als Handelsprodukt (nämlich in Gestalt verhältnismässig großer starrer Platten), wobei die Magnesiumphosphidteilchen einer Kunststoffgrundmasse einverleibt sind (aufkaschiert auf eine Bahn aus fasrigem Material). In dieser Darstellungsform soll das Magnesiumphosphid verhältnismässig geschützt vorliegen, so dass übermässige örtliche Anreicherungen von Wärme und Gas vermeidbar sind. Diese Darreichungsform ist jedoch für manche praktische Anwendungen unerwünscht, da sie sich nicht für die unmittelbare Einverleibung in Lebensmittel, beispielsweise verarbeitete Getreideprodukte eignet. Wenn die Platten auf eine flache Oberfläche gelegt werden, wird dadurch außerdem der freie Gasaustausch mit der Atmosphäre gestört, sowohl hinsichtlich des Zutritts der benötigten Feuchtigkeit zum Metallphosphid als auch hinsichtlich der schnellen Verteilung des freigesetzten Phosphorwasserstoffgases. Dieses bekannte Produkt entzündet sich bei der Berührung mit flüssigem Wasser und manchmal sogar aus anderen Gründen, z. B. aufgrund hoher Luftfeuchtigkeit in Verbindung mit hohen Umgebungstemperaturen. Derartiges kann versehentlich vorkommen, z. B. wenn das zu begasende Gut nass ist oder wenn man die Platten auf feuchten oder nassen Oberflächen auslegt, wobei die Nässe beispielsweise von Reinemacharbeiten, Regennässe und Undichtigkeiten herrühren kann.

Es wäre deshalb ein wesentlicher technischer Fortschritt, wenn man beispielsweise Magnesiumphosphid in Tabletten- oder Pelletform in einer ähnlichen Weise wie die äusserst erfolgreichen Aluminiumphosphidtabletten und Pellethandelsprodukte mit ähnlich hoher Gebrauchssicherheit anbieten könnte.

Die Forschung auf diesem Fachgebiet ist besonders schwierig, da für jede neue Zusammensetzung eines Präparats hunderte oder sogar tausende Tabletten und Pellets unter den verschiedensten Bedingungen unterschiedlicher Beanspruchung getestet werden müssen, ehe auf die Sicherheit oder Gefährlichkeit der Zusammensetzung geschlossen werden kann.

Die vorliegende Erfindung sieht nun ein Verfahren und ein Metallphosphidpräparat, insbesondere Schädlingsbekämpfungsmittel der obengenannten Art vor, wobei die Oberfläche der Metallphosphidteilchen mit einer schützenden Menge eines hydrophoben Ammoniumsalzes einer organischen Säure mit einem hydrophobierenden aliphatischen Rest in ihrem Molekül imprägniert wird. Die Imprägnierung kann durch einfache Mischung der Metallphosphidteilchen und des Ammoniumsalzes zustande gebracht werden.

Unter den Ausdrücken « Imprägnierung », « imprägnieren » etc. soll in vorliegender Anmeldung ein inniges Vermischen des Ammoniumsalzes der organischen Säure mit dem Metallphosphid verstanden werden ohne Rücksicht darauf, ob das Ammoniumsalz als Pulver oder in flüssiger, z. B. gelöster Form, zugemischt wird.

Vorzugsweise handelt es sich bei dem hydrophobierenden aliphatischen Rest um einen aliphatischen Kohlenwasserstoffrest, vorzugsweise gesättigt und vorzugsweise mit mindestens 11 Kohlenstoffatomen, z. B. von 11 bis 40, insbesondere von 14 bis 30, Kohlenstoffatomen.

Die bevorzugten organischen Säuren sind organische aliphatische Carbonsäuren, insbesondere gesättigte Carbonsäuren, vorzugsweise geradkettige oder höchstens geringfügig verzweigte Carbonsäuren, z. B. normale Fettsäuren oder Isofettsäuren, deren Kohlenstoffzahl den oben beschriebenen Werten entspricht. Besonders bevorzugt sind Palmitin- und Stearinsäure, insbesondere letztere.

Je nach der Herkunft der organischen Fettsäuren für die Herstellung der Ammoniumsalze kann die jeweils verwendete technisch reine Fettsäure mehr oder weniger grosse Mengen höherer oder niederer Homologe enthalten, die dann ebenfalls in den daraus hergestellten Ammoniumsalzen enthalten sind. Die Verwendung von Gemischen von Ammoniumsalzen verschiedener Säuren, z. B. Fettsäuren, fällt ebenfalls in den Rahmen der Erfindung.

Das Metallphosphid kann als technisches Metallphosphid vorliegen. Technisches Aluminiumphosphid enthält allgemein 75-90 % $Al_2P_3$. Dieses technische Aluminiumphosphid kann beispielsweise in einer Menge von 30-75 %, bezogen auf die Gesamtzusammensetzung des Metallphosphidpräparats, verwendet werden. Technisches Magnesiumphosphid enthält etwa 50 bis 93, beispielsweise 55 bis 63 Gew.-% der entsprechenden reinen Verbindung.

Erfindungsgemäss ist es auch möglich und bevorzugt, das genannte Ammoniumsalz in Kombination mit anderen Zusatzmitteln, insbesondere bekannten Zusatzmitteln wie den oben erwähnten zersetzlichen Ammoniumsalzen, insbesondere Ammoniumkarbamat sowie Harnstoff zu verwenden, z. B. in Mengen, die mehr oder weniger den üblichen und bekannten Grenzen entsprechen. Die Gesamtmenge beträgt z. B. 10-100 Gewichtsprozent bezogen auf technisches Metallphosphid, vorzugsweise 20-80 %, insbesondere 30-75 %. Dabei gelten die unteren Grenzen bevorzugt für Ammoniumkarbamat und die oberen Grenzen beispielsweise für Gemische von Ammoniumkarbamat mit bis zu etwa 50 % Harnstoff. Es können auch zusätzliche hydrophobierende Stoffe, einschliesslich der Metallseifen wie z. B. Aluminiumstearat Magnesiumstearat oder Zinkstearat vorliegen. Aus bisher unverstandenen und unbekannten Gründen erzielt man jedoch mit den erfindungsgemäss verwendeten hydrophobierenden Ammoniumsalzen eine Schutzwirkung, die mit den übrigen Stoffen nicht erreichbar ist. Beispielsweise war es erstaunlicherweise nicht möglich, die erfindungsgemässe Schutzwirkung des Ammoniumstearats zu erzielen, wenn stattdessen eine Kombination von Stearinsäure und Ammoniumkarbamat verwendet wurde.

Die Menge des erfindungsgemäss verwendeten Ammoniumsalzes zur Erzielung der gewünschten Schutzwirkung hängt natürlich einerseits vom Metallphosphid und andererseits davon ab, ob und welche weiteren schützenden Stoffe vorhanden sind. Im allgemeinen gilt, dass man im Falle von Ammoniumsalzen wie Ammoniumstearat mehr als 10 Gewichtsprozent, vorzugsweise wenigstens 13 %, z. B. von 15 bis 40 %, und insbesondere von 18 bis 30 %, bezogen auf technisches Metallphosphid, benötigt.

Selbstverständlich können die erfindungsgemäßen Metallphosphidpräparate in jeder zweckmäßigen Form, beispielsweise als Tabletten, Pellets oder Pulver, vorliegen. Des weiteren können je nach der Art des Präparates übliche Zusatzstoffe (wie z. B. Tablettierungshilfsmittel etc.) anwesend sein.

Die Erfindung erwies sich als besonders nützlich für die Fälle, wo als Metallphosphid Magnesiumphosphid verwendet wurde, da die Erfindung es in diesem Falle auch gestattet, ein brauchbares Sicherheitsverhalten selbst mit Zusammensetzungen zu erreichen, die verhältnismässig grosse Konzentrationen an Magnesiumphosphid enthalten, z. B. in Tabletten und Pellets, für die es in der Vergangenheit nicht möglich war, den erforderlichen Grad der Sicherheit wie für Aluminiumphosphidtabletten und -pellets in herkömmlicher Weise zu erzielen. Infolgedessen ist es nun auch möglich geworden, Magnesiumphosphidpräparate unmittelbar Nahrungsmitteln zuzumischen, einschliesslich verarbeiteten Nahrungsmitteln wie Mehl, wo die unmittelbare Zumischung von Aluminiumphosphidtabletten und -pellets wegen Rückstandsproblemen nicht praktikabel war. Im Gegensatz hierzu zersetzt sich Magnesiumphosphid so vollständig, dass die Rückstände an unzersetztem Metallphosphid am Ende des Begasungsverfahrens bei weitem innerhalb der zulässigen Grenzen liegen. Verwendet man Ammoniumstearat als Zusatzmittel in den erfindungsgemäss benötigten verhältnismässig geringen Konzentrationen, bleiben hiervon auch keine Rückstände zurück, die das begaste Produkt in unzulässiger Weise verschmutzen.

Besonders im Falle von Magnesiumphosphid ist es wünschenswert, die Schutzwirkung des organischen hydrophobierenden Ammoniumsalzes mit weiteren Schutzmassnahmen zur besseren Beherrschung der Reaktion des Metallphosphids mit Wasser zu unterstützen. Hierzu gehört die Verwendung eines technischen Magnesiumphosphids mit einem verhältnismässig hohen Gehalt an unreaktiven Stoffen, wie es z. B. gemäss der südafrikanischen Patentschrift Nr 67/1977 hergestellt werden kann. Als Alternative oder vorzugsweise Massnahme wird die spezifische Oberfläche des feinkörnigen Metallphosphids in einem Bereich gewählt, der eine brauchbare Hydrolysegeschwindigkeit, die weder zu schnell noch zu langsam für die praktische Anwendung ist, gewährleistet. Das wird durch die Einstellung des Grades der Zerkleinerung des feinkörnigen Metallphosphids erreicht.

Insbesondere erweist es sich als vorteilhaft, wenn 70 bis 100 %, vorzugsweise nicht weniger als 85 % und insbesondere nicht weniger als 90 % eines technischen Magnesiumphosphids einen Korngrössenbereich von 75 bis 1 000 μm aufweisen. Vorzugsweise sollten nicht mehr als 10 % des Materials kleiner als 75 μm und vorzugsweise nicht mehr als 55 % und insbesondere nicht mehr als 50 % kleiner sein als 200 μm. In bevorzugten Ausführungsformen liegen zwischen 70 und 95 %, noch besser zwischen 80 und 90 % des Metallphosphids im Korngrössenbereich von 75 bis 500 μm vor. Diese Korngrössenverteilung wird in herkömmlicher Weise durch trockene Siebanalyse bestimmt.

Beispiele

Beispiel 1

65,0 g Technisches Magnesiumphosphid ($Mg_3P_2$ Gehalt 60 %), 43,0 g Ammoniumkarbamat und 10 g Ammoniumstearat, jeweils in fein zerkleinerter Form, werden gründlich vermischt und zu Pellets (von je 0,6 g) oder Tabletten von je 3 g gepresst. Jedes Pellet entspricht 100 mg $PH_3$ und jede Tablette entspricht 0,5 g $PH_3$.

Die Tabletten werden gemäss BAM Vorschrift folgendermassen geprüft : 150 ml hohe Bechergläser werden einem Luftbad ausgesetzt, das auf Temperaturen im Bereich von 15 bis 40 °C thermostatisiert wird. Wasser wird in Mengen zwischen 5 und 60 ml hinzugefügt, in manchen Versuchen tropfenweise, in anderen Versuchen alles auf einmal. Zwischen 1 und 15 Pellets werden in jedes Becherglas gegeben, und manche der Versuche werden mit Pellets durchgeführt, die bereits teilweise an Luft zersetzt wurden. Ein Mittel gilt nur dann als gebrauchssicher, wenn es zu überhaupt keiner Selbstzündung kommt. 515 solcher Tests wurden ohne jegliche Selbstzündung durchgeführt.

Obwohl die oben beschriebenen Pellets und Tabletten im Vergleich zu herkömmlichen, handelsüblichen Aluminiumphosphidtabletten und Pellets nur die Hälfte der Phosphinmenge freisetzen, ist die Gasentwicklung sehr viel schneller. Aus diesem Grunde findet ein schneller Anstieg bis zu optimalen Phosphorwasserstoffkonzentration statt, wodurch es möglich ist, die Begasung mit der Hälfte der für Aluminiumphosphidtabletten üblichen Dosierung durchzuführen.

Beispiel 2

Beispiel 1 wird mit einem Gemisch von 70 g technischem Aluminiumphosphid, 20 g Ammoniumkarbamat und 10 g Ammoniumstearat durchgeführt. Die Pellets und Tabletten sind gemäss dem BAM Test völlig gebrauchssicher, obwohl sie im Vergleich zu den Tabletten und Pellets gemäss Beispiel 1 pro Tablette oder Pellet die zweifache Menge an $PH_3$ liefern.

Beispiel 3

Beispiel 2 wird mit einem Gemisch von 70 g technischem Magnesiumphosphid, 20 g Ammoniumkarbamat und 10 g Ammoniumstearat durchgeführt. Die so hergestellten Tabletten und Pellets sind völlig gebrauchssicher, trotz des im Vergleich zu den übrigen Komponenten höheren Gehaltes an Magnesiumphosphid in diesen Ta-

bietten.

Zum Vergleich wird das Beispiel mit 10 g Magnesiumstearat an Stelle der 10 g Ammoniumstearat durchgeführt. Mit diesen Tabletten und Pellets kommt es in einigen der Versuche zur Selbstzündung.

Beispiel 4

Beispiel 1 wird mit Ammoniumpalmitat und Ammoniumlaurat an Stelle des Ammoniumstearats durchgeführt. Die Ergebnisse des Sicherheitstests entsprechen im wesentlichen denen, die mit Ammoniumstearat erzielt wurden.

In den oben beschriebenen Beispielen handelte es sich beim Magnesiumphosphid um ein technisches, gemäss südafrikanischer Patentschrift 67/1977 (US-PS 3 532 464, GB-PS 1 146 955, DDR-PS 60 292 und anderer entsprechender Patente), vorzugsweise Beispiel 8, hergestelltes Magnesiumphosphid. Das Magnesiumphosphid war auf eine Korngröße von im wesentlichen zwischen 0,1 und 2 mm, vorzugsweise überwiegend zwischen 0,2 und 1 mm, zerkleinert.

Eine typische Korngrössenverteilung ist (laut Siebanalyse):

| | |
|---|---|
| grösser als 1 000 μm | 1,7 % |
| grösser als 500 μm | 5,7 % |
| grösser als 300 μm | 22,6 % |
| grösser als 200 μm | 29,0 % |
| grösser als 75 μm | 35,6 % |
| kleiner als 75 μm | 6,0 % |
| | 100 % |

**Patentansprüche**

1. Verfahren zur Hemmung der Neigung zur Selbstentzündung hydrolysierbarer Metallphosphidpräparate durch Behandlung der Oberfläche von Metallphosphidteilchen mit einem hydrophobierenden Stoff, dadurch gekennzeichnet, daß ohne zusätzliche Verwendung von 1,2,4-Trimethylbenzol auf der Oberfläche der Metallphosphidteilchen ein Ammoniumsalz einer organischen Säure, vorzugsweise einer Carbonsäure, mit einem hydrophobierenden aliphatischen Rest in ihrem Molekül aufgebracht wird.

2. Verfahren gemäß Anspruch 1, dadurch gekennzeichnet, daß der aliphatische Rest ein aliphatischer Kohlenwasserstoffrest ist, welcher vorzugsweise gesättigt ist und von 11 bis 40 Kohlenstoffatome besitzt.

3. Verfahren gemäß einem oder mehreren der Ansprüche 1-2, dadurch gekennzeichnet, daß die organische Säure eine aliphatische Carbonsäure ist, die vorzugsweise geradkettig oder höchstens geringfügig verzweigt ist und insbesondere den Palmitin- und/oder Stearinsäurerest aufweisen kann.

4. Verfahren gemäß einem oder mehreren der Ansprüche 1-3, dadurch gekennzeichnet, daß das Metallphosphid Magnesiumphosphid ist.

5. Metallphosphidpräparat mit gehemmter Neigung zur Selbstentzündung, insbesondere zur Schädlingsbekämpfung, mit hydrolisierbaren Metallphosphidteilchen, auf deren Oberfläche ein hydrophober Stoff aufgebracht ist, dadurch gekennzeichnet, daß auf der Oberfläche der Metallphosphidteilchen ein Ammoniumsalz einer organischen Säure, vorzugsweise einer Carbonsäure mit einem hydrophoben aliphatischen Rest in ihrem Molekül, aufgebracht ist, wobei ein Präparat aus 70 Teilen Magnesiumphosphid, 20 Teilen Harnstoff und 10 Teilen Ammoniumstearat sowie Präparate, die 1,2,4-Trimethylbenzol enthalten, ausgenommen sind.

6. Präparat gemäß Anspruch 5, dadurch gekennzeichnet, daß der aliphatische Rest ein aliphatischer vorzugsweise gesättigter Kohlenwasserstoffrest ist, der geradkettig bzw. höchstens geringfügig verzweigt sein kann.

7. Präparat gemäß einem oder mehreren der Ansprüche 5-6, dadurch gekennzeichnet, daß der aliphatische Rest 11 bis 40 Kohlenstoffatome, vorzugsweise 14 bis 30 Kohlenstoffatome, besitzt.

8. Präparat gemäß einem oder mehreren der Ansprüche 5-7, dadurch gekennzeichnet, daß das Metallphosphid ein Magnesiumphosphid mit einer Reinheit von etwa 50 bis 93 % ist.

9. Verfahren zur Herstellung eines Phosphinhaltigen Gasgemisches durch Hydrolyse eines Metallphosphids, dadurch gekennzeichnet, daß ein Metallphosphidpräparat nach einem oder mehreren der Ansprüche 5-8 Feuchtigkeit ausgesetzt wird.

10. Verwendung eines Metallphosphidpräparats nach einem oder mehreren der Ansprüche 5-8 zum Schutz gegen Schädlingsbefall oder -einwirkung.

**Claims**

1. Process for reducing the tendency of hydrolisable metal phosphide preparations to autoignite by treating the surface of metal phosphide particles with a hydrophobising substance, characterised in that without additional use of 1,2,4-trimethylbenzene an ammonium salt of an organic acid, preferably a carboxylic acid, comprising a hydrophobising aliphatic moiety in its molecule is applied onto the surface of the metal phosphide particles.

2. Process according to claim 1, characterised in that the aliphatic moiety is an aliphatic hydrocarbon moiety which is preferably saturated and has from 11 to 40 carbon atoms.

3. Process according to one or more of claims 1-2, characterised in that the organic acid is an aliphatic carboxylic acid which is preferably straight-chain or at the most weakly branched and may in particular comprise the palmitic and/or stearic acid moiety.

4. Process according to one or more of claims 1-3, cnaracterised in that the metal phosphide is magnesium phosphide.

5. Metal phosphide preparation having an inhibited tendency to auto-ignite, in particular for pest control, comprising hydrolysable metal phosphide particles onto the surface of which a hydrophobic substance has been applied, characterised in that on the surface of the metal phosphide particles an ammonium salt of an organic acid, preferably a carboxylic acid having a hydrophobic aliphatic moiety in its molecule is applied, a preparation composed of 70 parts magnesium phosphide, 20 parts urea and 10 parts ammonium stearate and preparations containing 1,2,4 trimethyl benzene being excluded.

6. Preparation according to claim 5, characterised in that the aliphatic moiety is an aliphatic, preferably saturated hydrocarbon moiety which may be straight-chain or at the most weakly branched.

7. Preparation according to one or more of claims 5-6, characterised in that the aliphatic moiety has 11 to 40 carbon atoms, preferably 14 to 30 carbon atoms.

8. Preparation according to one or more of claims 5-7, characterised in that the metal phosphide is a magnesium phosphide having a purity of about 50 to 93 %.

9. Process for the manufacture of a phosphine-containing gas mixture by hydrolysis of a metal phosphide, characterised in that a metal phosphide preparation according to one or more of claims 5-8 is exposed to moisture.

10. Use of a metal phosphide preparation according to one or more of claims 5-8 for the protection against pest infestation or action.

**Revendications**

1. Procédé de prévention de la tendance à l'auto-inflammation de préparations de phosphure métallique hydrolysable par traitement de la surface de particules de phosphure métallique avec une substance rendant hydrophobe, caractérisé en ce que sans utilisation supplémentaire de 1,2,4-triméthylbenzène on dépose sur la surface des particules de phosphure métallique un sel d'ammonium d'un acide organique, de préférence un acide carboxylique qui porte dans sa molécule un reste aliphatique qui rend hydrophobe.

2. Procédé selon la revendication 1, caractérisé en ce que le reste aliphatique est un reste d'hydrocarbure aliphatique qui est saturé de préférence et possède de 11 à 40 atomes de carbone.

3. Procédé selon l'une ou plusieurs des revendications 1-2, caractérisé en ce que l'acide organique est un acide carboxylique aliphatique, qui est de préférence linéaire ou au plus faiblement ramifié et qui peut notamment présenter le reste d'acide palmitique et/ou stéarique.

4. Procédé selon l'une ou plusieurs des revendications 1-3, caractérisé en ce que le phosphure métallique est du phosphure de magnésium.

5. Préparation de phosphure métallique à tendance inhibée à l'auto-inflammation, notamment pour la lutte anti-parasitaire, avec des particules de phosphure métallique hydrolysables, sur la surface desquelles a été déposée une substance hydrophobe, caractérisée en ce qu'est déposé à la surface des particules de phosphure métallique un sel d'ammonium d'un acide organique, de préférence un acide carboxylique portant dans sa molécule un reste aliphatique hydrophobe, d'où sont exclues une préparation à base de 70 parties de phosphure de magnésium, 20 parties d'urée et 10 parties de stéarate d'ammonium, ainsi que des préparations qui contiennent le 1,2,4-triméthylbenzène.

6. Préparation selon la revendication 5, caractérisée en ce que le reste aliphatique est un reste d'hydrocarbure aliphatique de préférence saturé, qui peut être linéaire ou au plus légèrement ramifié.

7. Préparation selon l'une ou plusieurs des revendications 5-6 caractérisée en ce que le reste aliphatique possède de 11 à 40 atomes de carbone, de préférence 14 à 30 atomes de carbone.

8. Préparation selon l'une ou plusieurs des revendications 5-7, caractérisée en ce que le phosphure métallique est un phosphure de magnésium avec une pureté comprise entre 50 et 93 %.

9. Procédé de préparation d'un mélange gazeux contenant de la phosphine par hydrolyse d'un phosphure métallique, caractérisé en ce qu'on expose à l'humidité une préparation de phosphure métallique selon l'une ou plusieurs des revendications 5-8.

10. Utilisation d'une préparation de phosphure métallique selon l'une ou plusieurs des revendications 5-8 pour protéger de la contamination par des parasites et de leurs actions.